# EUROPÄISCHE PATENTSCHRIFT

(11) **EP 2 101 058 B1**
(45) Veröffentlichungstag und Bekanntmachung des Hinweises auf die Patenterteilung: **06.05.2015**
(21) Anmeldenummer: 09003558.5
(22) Anmeldetag: 11.03.2009
(51) Int. Cl.: F03D 7/02

(54) **Verfahren und Vorrichtung zum Drehen einer Komponente einer Windenergieanlage**
Method and device for turning a component of a wind energy plant
Méthode et dispositif pour tourner un composant d'une éolienne

(30) Priorität: 12.03.2008 DE 102008013864
(43) Veröffentlichungstag der Anmeldung: 16.09.2009
(73) Patentinhaber: Nordex Energy GmbH, 22419 Hamburg (DE)
(72) Erfinder: Keller, Harald, 22763 Hamburg (DE); Wiese-Müller, Lars-Ulrich, 25421 Pinneberg (DE); Voß, Eberhard, 18233 Jörnstorf (DE)
(74) Vertreter: Hauck Patentanwaltspartnerschaft mbB

(56) Entgegenhaltungen:
- EP-A1- 0 428 783
- DE-A1- 10 127 102
- DE-A1- 19 920 504
- DE-A1-102007 049 368
- DE-B- 1 290 232
- FR-A5- 2 120 447
- GB-A- 399 223
- US-A1- 2005 175 451

## Beschreibung

Die Erfindung betrifft ein Verfahren und eine Vorrichtung zum Drehen einer Komponente einer Windenergieanlage durch Verfahren einer Verstelleinrichtung. Verstelleinrichtungen kommen in Windenergieanlagen zum Drehen unterschiedlicher Komponenten zum Einsatz. Ein bekanntes Beispiel ist die Blatteinstellwinkel-Verstelleinrichtung, mit der der Blatteinstellwinkel (Pitchwinkel) der Rotorblätter der Anlage eingestellt wird. Dabei werden die Rotorblätter um ihre Längsachse gedreht. Eine solche Blatteinstellwinkel-Verstelleinrichtung ist üblicherweise Teil einer sogenannten Pitchregelung. Ein anderes ebenfalls bekanntes Beispiel sind Azimutverstelleinrichtungen, mit denen das Maschinenhaus der Windenergieanlage um die Längsachse des Turms gedreht wird. Solche Azimutverstelleinrichtungen sind Teil eines sogenannten Azimutsystems der Windenergieanlage, das die Aufgabe hat, das Maschinenhaus bzw. die Gondel der Windenergieanlage optimal zur Windrichtung auszurichten und von Zeit zu Zeit die zwischen dem Turm der Anlage und dem Maschinenhaus verlaufenden Leitungen (Kabelloop) zu entdrillen. Solche Azimutsysteme sind beispielsweise bekannt aus Erich Hau, Windkraftanlagen, Springer Verlag, 3. Auflage, Seite 309ff.

Die Verstelleinrichtungen weisen in der Regel einen oder mehrere Verstellantriebe auf. Beispielsweise bei Azimutverstellantrieben ist üblicherweise ein Planetengetriebe, ein Motor, beispielsweise ein Elektromotor, und eine Bremseinrichtung, beispielsweise eine Elektrobremse, vorgesehen. Das Abtriebsritzel des Getriebes kämmt dabei in die Verzahnung einer Azimutdrehverbindung. Die Drehmomente und Drehzahlen werden in den Getrieben über Verzahnungen über- oder untersetzt. Im Betrieb sind die Verstellsysteme wechselnden dynamischen Lasten, insbesondere aus dem angreifenden Wind, ausgesetzt. Dabei entstehen Elastizitäten bei den Antrieben, als deren Folge die Verstellsysteme nicht umgehend auf die äußeren Lasten reagieren bzw. nicht sprunghaft ein gefordertes Antriebsmoment aufbringen können. Die Elastizität von Getrieben ist vom Zahnspiel der einzelnen Verzahnungseingriffe abhängig. Je mehr Zahneingriffe für die Getriebeübersetzung verwendet werden, und je größer das jeweilige Zahnspiel ist, desto größer ist die Elastizität des Getriebes. Beispielsweise bei Azimutantrieben kann die Elastizität bei einer Verspannung bis zum Nennmoment bis zu zehn Umdrehungen der schnellen Welle eines vierstufigen Planetengetriebes betragen. Herkömmlich verteilen sich beim Verfahren der Verstelleinrichtungen geringe Teilmomente auch auf die Drehverbindung bzw. die zum Halten des Azimutsystems eingesetzte Bremseinrichtung, insbesondere die Bremszangen.

Das Antriebsmoment der Verstellantriebe ist auf hohe Lastfälle ausgelegt, wobei bei Überschreiten dieser Lastfälle die Verstelleinrichtung, beispielsweise eine Azimutverstelleinrichtung, eine Drehzahländerung erfährt, insbesondere abgebremst oder beschleunigt wird. Weiterhin müssen bei den Betriebszustandswechseln Halten auf Fahren und Fahren auf Halten Lastübernahmen realisiert werden, die zum Absinken des gemeinsamen Antriebs-/Haltemoments führen können. Diese Momenteneinbrüche können unterschiedliche Gründe haben:
Wenn die Windlasten einen Wechsel zwischen treibenden und bremsenden Lasten erfordern, sinkt das Antriebsmoment der Verstellantriebe, da sich die Antriebe aufgrund der bestehenden Elastizitäten für mehrere Umdrehungen neu aufziehen müssen. Außerdem können die Verstellantriebe, insbesondere die Azimutantriebe bei elektronischer Ansteuerung über Sanftanlasser oder Frequenzumrichter bei geringen Drehzahlen, insbesondere beim Anfahren, eine Regelungenauigkeit aufweisen und daher nicht umgehend auf Lastwechsel reagieren. Schließlich kann der Aufbau des Haltemoments von konventionell eingesetzten Bremszangen, der über eine Rampe erfolgt, mehrere Sekunden andauern. Dadurch verzögert sich die Lastübernahme durch die Bremszangen auf die Antriebe.

Es ist bekannt, mit einer Bremseinrichtung der Verstellantriebe ein Resthaltemoment, beispielsweise über einen Anpressdruck entsprechender Bremszangen, aufrechtzuerhalten, so dass die Antriebe gegen eine Grundlast verfahren. Im Betrieb der Anlage liegen Lastfälle vor, bei denen die Verstelleinrichtung von den Lasten aus dem Wind getrieben oder abgebremst wird. Die Momente der angreifenden Lasten verteilen sich beispielsweise im Fall einer Azimutverstelleinrichtung auf die Teilsysteme Azimutantrieb, Drehverbindung und Bremszangen einer Bremseinrichtung. Für den Fall eines herkömmlichen Azimutsystems werden die Lastfälle in der folgenden Tabelle aufgeführt. Insbesondere wird dabei auch die Wirkung auf das Azimutsystem mit dem Resthaltemoment der Bremszangen der Bremseinrichtung aufgeführt:

| **"Lastfall" des Azimutsystems** | **Azimutantrieb** | **Bremszangen** | **Drehverbindung** | **Wirkung auf das Azimutsystem** |
|---|---|---|---|---|
| Anfahren mit Gegenmoment aus dem Wind | treibend | haltend | haltend | Erschwertes Losfahren |
| | | | | Verzögertes Losfahren |
| | | | | Das Resthaltemoment |
| | | | | erschwert das Losfahren zusätzlich |
| Fahren mit Gegenmoment aus dem Wind | treibend | haltend | haltend | Reduzierte Verfahrgeschwindigkeit |
| | | | | Häufiges Einbrechen der Nenndrehzahl |
| | | | | Das Resthaltemoment verschlechtert das Drehzahlverhalten |
| Anhalten mit Gegenmoment aus dem Wind | bremsend | haltend | haltend | Das Resthaltemoment unterstützt den Anhaltevorgang |
| Anfahren mit treibendem Moment aus dem Wind | treibend | haltend | haltend | Das Resthaltemoment schützt vor Überschreiten der Nenndrehzahl |
| Fahren mit treibendem Moment aus dem Wind | treibend oder bremsend | haltend | haltend | Das Resthaltemoment schützt vor Drehzahlschwankungen |
| Anhalten mit treibendem Moment aus dem Wind | bremsend | haltend | haltend | Das Resthaltemoment unterstützt den Anhaltevorgang |

Ein Nachteil des Aufbringens eines Resthaltemoments durch eine Bremseinrichtung beim Verfahren der Verstelleinrichtung ist erhöhter Verschleiß der Bremse und eine dadurch erforderliche regelmäßige Wartung.

Aus US 5,035,575 A ist ein Azimutsystem einer Windenergieanlage bekannt, bei der im Stillstand der Azimutverstelleinrichtung zwei Motoren der Verstellantriebe gegensinnig mit einem gleichgroßen Drehmoment betrieben werden. Dadurch wird im Stillstand eine Verspannung der Verstelleinrichtung erreicht. Beim Verfahren des Azimutsystems drehen dann beide Motoren in dieselbe Richtung und mit demselben Drehmoment. Beim Verfahren der Verstelleinrichtung wird dabei somit kein Verspannen mehr erreicht. Aus DE 103 58 486 A1 ist darüber hinaus ein Azimutantrieb für eine Windenergieanlage bekannt, die eine hydraulische Einrichtung zum Verspannen der Antriebe aufweist. Insbesondere sind dabei zwei Hydromotoren vorgesehen, die in gegensinniger Drehrichtung und mit gleich großem Drehmoment über entsprechende Antriebsräder an dem Abtriebszahnkranz einer Azimutverbindung angreifen. Auf diese Weise soll ein Spiel zwischen den Antriebskomponenten beseitigt werden. Mittels einer zweiten Pumpe, die ebenfalls in den hydraulischen Kreis geschaltet ist, kann mit einem einstellbaren Förderstrom das Azimutsystem verfahren werden. Bei der bekannten Vorrichtung ist ein aufwendiges Hydrauliksystem erforderlich, um eine Spielbeseitigung durch zwei an einem Abtriebszahnrad anliegende, in gegenläufiger Drehrichtung zueinander betriebene Antriebsräder zu erreichen.

Aus DE 199 20 504 A1 ist eine Windenergieanlage mit einem Maschinenhaus und einer Verstelleinrichtung zur Verstellung des Maschinenhauses bekannt, wobei die Verstelleinrichtung als Antrieb einen Drehstrom-Asynchronmotor aufweist, der für eine Verstellung des Maschinenhauses mit einem Drehstrom und während der Stillstandszeit des Maschinenhauses mit einem Gleichstrom beaufschlagt wird.

Aus DE 101 27 102 A1 wird eine Verstelleinrichung aus dem Stand der Technik bekannt.

Ausgehend von dem voran erläuterten Stand der Technik liegt der Erfindung die Aufgabe zugrunde, ein Verfahren und eine Vorrichtung der eingangs genannten Art bereitzustellen, mit denen ein Verspannen der Verstelleinrichtung in einfacher und kostengünstiger Weise möglich ist.

Diese Aufgabe wird gemäß der Erfindung durch die Gegenstände der unabhängigen Ansprüche 1 und 16 gelöst. Vorteilhafte Ausgestaltungen finden sich in den abhängigen Ansprüchen sowie der Beschreibung und den Figuren.

Die Erfindung löst die Aufgabe zum einen durch ein Verfahren zum Drehen einer Komponente einer Windenergieanlage durch Verfahren einer Verstelleinrichtung, wobei die Verstelleinrichtung mindestens zwei jeweils mindestens einen Elektromotor aufweisende Verstellantriebe zum Verfahren der Verstelleinrichtung umfasst, und wobei während des Verfahrens der Verstelleinrichtung der Elektromotor mindestens eines der mindestens zwei Verstellantriebe mit einer anderen Drehzahl betrieben wird, als der Elektromotor des mindestens einen anderen der mindestens zwei Verstellantriebe.

Die Erfindung löst die Aufgabe auch durch eine Verstelleinrichtung zum Drehen einer Komponente einer Windenergieanlage durch Verfahren der Verstelleinrichtung mit mindestens zwei jeweils mindestens einen Elektromotor aufweisenden Verstellantrieben zum Verfahren der Verstelleinrichtung, wobei die Verstelleinrichtung eine Steuereinrichtung aufweist, die dazu ausgebildet ist, während des Verfahrens der Verstelleinrichtung den Elektromotor mindestens eines der mindestens zwei Verstellantriebe mit einer anderen Drehzahl zu betreiben, als den Elektromotor des mindestens einen anderen der mindestens zwei Verstellantriebe.

Erfindungsgemäß werden die Antriebsmomente unterschiedlich auf die mindestens zwei Verstellantriebe verteilt. Das geforderte Gesamtantriebsmoment wird in der Hauptsache von einem oder mehreren motorisch wirkenden Antrieben aufgebracht, wobei mindestens ein Antrieb mit einem kleinen Gegenmoment der Solldrehrichtung entgegenwirkt. Auf diese Weise wird eine Verspannung der Antriebe gegeneinander realisiert. Die andere Drehzahl des Elektromotors eines der Verstellantriebe kann dabei insbesondere eine (absolut) geringere Drehzahl als die Drehzahl des bzw. der Elektromotoren des anderen Verstellantriebs bzw. der anderen Verstellantriebe sein. Eine andere Drehzahl kann aber auch bedeuten, dass der Absolutwert der Drehzahlen gleich ist, die Drehzahlen jedoch unterschiedliche Vorzeichen besitzen. In diesem Fall werden die Elektromotoren also in unterschiedlicher Drehrichtung betrieben. Aufgrund der erfindungsgemäßen Differenzdrehzahl kommt es zu einer Verspannung der Antriebe gegeneinander. Insbesondere legt sich die Verzahnung eines Getriebes der Verstellantriebe in zu der Drehrichtung entgegengesetzter Richtung an. Auf diese Weise werden Elastizitäten der Antriebe minimiert. Erfindungsgemäß wird dadurch im Vergleich zum Stand der Technik in konstruktiv und steuerungstechnisch einfacher Weise eine ausreichende Verspannung der Verstellantriebe gegeneinander erreicht. Diese Verspannung liegt insbesondere auch beim Verfahren der Verstellantriebe vor. Bei der erfmdungsgemäßen lastabhängigen Antriebssteuerung mit gegenseitiger Verspannung der Verstellantriebe wirkt also mindestens ein Antrieb mit seinem Antriebsmoment gegen das oder die antreibenden übrigen Verstellantriebe. Es wird eine höhere Steifigkeit beim Verfahren der Verstelleinrichtungen erreicht. Außerdem werden auf diese Weise die durch die Elastizitäten der Antriebe entstehenden momentfreien Bereiche, die sogenannten Momentenlöcher, bei Anfahr- und Haltevorgängen reduziert. Die Beschleunigung, die beispielsweise ein Maschinenhaus der Anlage erfährt, wenn Momentenlöcher auftreten, wird entsprechend gedämpft. Darüber hinaus werden durch Windlasten verursachte Beschleunigungen, die größer sind als das Antriebsmoment, vermieden. Ebenso werden unzulässig hohe Drehzahlen der Verstellsysteme verhindert, die anderenfalls zu einer Schädigung von Komponenten der Windenergieanlage führen könnten.

Die erfindungsgemäße Steuereinrichtung ist dabei dazu ausgebildet, die Verstellantriebe bzw. Elektromotoren individuell anzusteuern, insbesondere mit Drehzahl- und/oder Drehmomentsollwerten. Das Antriebsmoment der Verstellantriebe kann dabei auf einen Grenzwert, beispielsweise das maximale Moment, für das die Antriebe ausgelegt sind, begrenzt werden. Weiterhin ist die Steuereinrichtung dazu ausgebildet, zu erkennen, wie sich das gesamte Antriebsmoment auf die einzelnen Antriebe verteilt, und wie hoch die Istdrehzahl des Verstellsystems ist. Dabei variiert die Steuereinrichtung die Drehzahl- oder Momentensollwerte der einzelnen Antriebe so, dass das Verstellsystem mit Solldrehzahl verfahren wird. Aus einem Verfahrwunsch für die Verstelleinrichtung kann die Steuereinrichtung das insgesamt von den Antrieben aufzubringende Antriebsmoment ermitteln und auf die unterschiedlichen Antriebe bzw. ihre E-Motoren verteilen. Anschließend können die E-Motoren entsprechend angesteuert werden. Die Steuerung erfolgt dabei so, dass ein oder mehrere Antriebe treibend (motorisch) und mindestens ein Antrieb bremsend (generatorisch) wirken. Von der Steuereinrichtung kann das tatsächlich aufgebrachte Antriebsmoment gemessen und die Drehzahlen bzw. Solldrehmomente der einzelnen Antriebe bzw. Elektromotoren entsprechend geregelt werden. Zur Durchführung dieser Aufgaben kann die Steuereinrichtung eine geeignete Auswerteeinrichtung besitzen.

Die Verstellantriebe können neben dem Elektromotor jeweils ein Getriebe, insbesondere ein Planetengetriebe, und wahlweise eine Bremseinrichtung (z.B. Elektrobremse) zum Halten des jeweiligen Elektromotors aufweisen. Die Elektromotoren können Asynchronmotoren sein (Drehstromasynchronmotoren). Sie können beispielsweise über Frequenzumrichter angesteuert werden. Die Elektromotoren weisen üblicherweise Rotoren und entsprechende Statoren auf. Das Betreiben der Elektromotoren in einer bestimmten Drehrichtung bzw. mit einer bestimmten Drehzahl bedeutet also die Drehrichtung und die Drehzahl der Rotoren der Elektromotoren.

Es ist möglich, dass die Elektromotoren der unterschiedlichen Verstellantriebe in entgegen gesetzter Drehrichtung betrieben werden. Besonders bevorzugt ist es jedoch, wenn die mit unterschiedlicher Drehzahl betriebenen Elektromotoren in gleicher Drehrichtung betrieben werden. Dieser Ausgestaltung liegt die Erkenntnis zugrunde, dass es für eine wirksame Verspannung der Antriebe ausreichend ist, wenn einer der Antriebe zwar in derselben Richtung betrieben wird, wie die übrigen Antriebe, jedoch mit einer geringeren Drehzahl. Auf diese Weise wird in für die Antriebe besonders schonender Weise eine ausreichende Verspannung erreicht. Durch das Vorgeben derart unterschiedlicher Solldrehzahlen bei der Ansteuerung der Elektromotoren der Verstellantriebe befindet sich einer der Elektromotoren sozusagen in einem Rückstand gegenüber den übrigen Motoren und sorgt auf diese Weise für die Verspannung. Es besteht insbesondere ein Schlupf zwischen den Elektromotoren. Dabei können alle Elektromotoren sämtlicher Verstellantriebe in der gleichen Drehrichtung betrieben werden.

Bevorzugt erfolgt eine Momentenregelung dahingehend, dass der bzw. die jeweils antreibenden Verstellantriebe bzw. Elektromotoren ein vorgegebenes Sollantriebsdrehmoment nicht überschreiten und der mit einer anderen, insbesondere geringeren, Drehzahl betriebene Verstellantrieb bzw. Elektromotor nur mit einem Bruchteil des Sollantriebsdrehmoment gegen die Antriebswirkung des bzw. der übrigen Verstellantriebe bzw. Elektromotoren wirkt. Auf diese Weise kann das entgegenwirkende Drehmoment die Verstellantriebe nicht schädigen und liegt im dauerfesten Bereich des Getriebes. Beeinträchtigungen der Lebensdauer sind somit nicht zu befürchten. Gemäß einer Ausgestaltung kann der den mit einer anderen, insbesondere niedrigeren, Drehzahl betriebenen Elektromotor aufweisende Verstellantrieb beim Verfahren der Verstelleinrichtung ein dem jeweiligen Antriebsmoment des bzw. der anderen Verstellantriebe entgegen gerichtetes Drehmoment von 5 bis 10 % des jeweiligen Antriebsmoments des bzw. der anderen Verstellantriebe aufbringen. Bringt jeder Antrieb beispielsweise ein Nennmoment von 100 Nm auf, so kann der mit der niedrigeren Drehzahl betriebene Elektromotor bzw. Verstellantrieb also ein Gegenmoment von 5 bis 10 Nm aufbringen. Nach einer weiteren Ausgestaltung kann zwischen dem mit einer anderen, insbesondere geringeren, Drehzahl betriebenen Elektromotor und dem Elektromotor des bzw. der anderen Verstellantriebe eine Drehzahldifferenz von jeweils 20 bis 100 Umdrehungen pro Minute (rpm) bestehen.

Die Erfindung ist grundsätzlich bei sämtlichen Verstelleinrichtungen einsetzbar, bei denen Elastizitäten vorhanden sind, und somit eine Verspannung wünschenswert ist. In besonders praxisgemäßer Weise kann die Komponente jedoch ein Maschinenhaus der Windenergieanlage sein und die Verstelleinrichtung eine Azimutverstelleinrichtung. Mit der Verstelleinrichtung kann dann das Maschinenhaus der Anlage um die Längsachse des Turms der Anlage gedreht werden. Auf diese Weise ist ein Nachführen des Rotors der Anlage nach dem Wind und von Zeit zu Zeit ein Entdrillen des Kabelloops zwischen Maschinenhaus und Turm möglich. Es ist aber auch möglich, dass die Komponente ein Rotorblatt der Windenergieanlage ist und die Verstelleinrichtung eine Blatteinstellwinkel-Verstelleinrichtung. In diesem Fall kann mit der Verstelleinrichtung der Blatteinstellwinkel der Rotorblätter der Anlage durch Drehen der Rotorblätter um ihre Längsachse eingestellt werden.

Gemäß einer Ausgestaltung kann die Verstelleinrichtung mehr als zwei Verstellantriebe, insbesondere drei oder mehr Verstellantriebe, mit jeweils mindestens einem Elektromotor aufweisen. Es ist dann möglich, dass die Elektromotoren von mehr als zwei Verstellantrieben, insbesondere sämtlichen Verstellantrieben der Verstelleinrichtung, während des Verfahrens der Verstelleinrichtung in gleicher Drehrichtung betrieben werden und, dass der Elektromotor mindestens eines der mehr als zwei Verstellantriebe mit einer geringeren Drehzahl betrieben wird, als die Elektromotoren der anderen der mehr als zwei Verstellantriebe. Bei dieser Ausgestaltung wird also insbesondere ein Elektromotor eines Verstellantriebs mit einer geringeren Drehzahl betrieben als die Elektromotoren der übrigen Verstellantriebe. Die Elektromotoren der anderen Verstellantriebe können dabei mit der gleichen Drehzahl betrieben werden.

Gemäß einer weiteren Ausgestaltung können der bzw. die Elektromotoren des bzw. der anderen Verstellantriebe mit der Nenndrehzahl zum Verfahren der Verstelleinrichtung betrieben werden. Bei dieser Ausgestaltung werden also insbesondere die Elektromotoren sämtlicher Verstellantriebe bis auf den mit geringerer Drehzahl und damit generatorisch wirkenden Elektromotor mit Nenndrehzahl betrieben.

Bei hohen gegen die Verfahrbewegung der Verstelleinrichtung wirkenden Lasten kann die Drehzahl des mindestens einen mit einer geringeren Drehzahl betriebenen Elektromotors erhöht werden. Bei dieser Ausgestaltung kann also z.B. bei starkem gegen die Drehrichtung wirkenden Wind der mit der geringeren Drehzahl, jedoch in der gleichen Drehrichtung wie die übrigen Elektromotoren betriebene Elektromotor ebenfalls auf Nenndrehzahl betrieben werden, um die übrigen Antriebe beim Verfahren der Verstelleinrichtung gegen den Wind zu unterstützen. Der mit der geringeren Drehzahl betriebene Elektromotor stellt also eine Leistungs- und Momentenreserve dar, die im Bedarfsfall abgerufen werden kann. Das gesamte Antriebsmoment der Antriebe der Verstelleinrichtung ist so ausgelegt, dass alle Antriebe gemeinsam mit maximalem Moment gegen die maximal auftretenden Lasten sicher verfahren können. Die Steuereinrichtung kann eine Lastenmesseinrichtung, z.B. eine Windmesseinrichtung, aufweisen. Bei Überschreiten einer Grenzlast kann die Steuereinrichtung dann die Drehzahl des die Verspannung bewirkenden bremsenden Elektromotors erhöhen.

Bei einem Stillstand der Verstelleinrichtung können die Elektromotoren zumindest zweier Azimutantriebe in entgegengesetzter Drehrichtung, aber mit einer Drehzahl ungleich Null so angesteuert werden, dass die Verstellantriebe in Summe kein Drehmoment auf die Verstelleinrichtungen ausüben. In diesem Fall werden also auch bei einem Stillstand der Verstelleinrichtungen eine Verspannung und ein Halten der Verstelleinrichtung erreicht. Es kann somit auf die üblicherweise auf der schnellen Welle des Antriebsstrangs der Windenergieanlage befindliche Halte-/Betriebsbremse verzichtet werden, da sich die Verstellantriebe ständig im Nachführbetrieb befinden und das Verstellsystem im Stillstand festsetzen. Insbesondere können dabei die Elektromotoren zweier unterschiedlicher Verstellantriebe in entgegengesetzter Drehrichtung, aber mit gleichem Moment betrieben werden, und die Elektromotoren der übrigen Verstellantriebe nicht betrieben werden (Drehzahl Null).

Aufgrund der Verspannung der Verstellantriebe in der erfindungsgemäßen Weise ist es weiterhin möglich, dass während des Verfahrens der Verstelleinrichtung kein Resthaltemoment von einer Bremseinrichtung auf die Verstelleinrichtung ausgeübt wird. Dieses Resthaltemoment kann vielmehr durch die Verspannung der Antriebe ersetzt werden. Das Verfahren der Verstelleinrichtung verläuft somit gedämpft, und es resultieren ein verringerter Verschleiß und eine geringere Wartung. Außerdem kann das von allen Antrieben gemeinsam aufzubringende Gesamtantriebsmoment geringer dimensioniert werden, als bei Vorsehen eines Resthaltemoments beim Verfahren. Bei einem ausreichenden Antriebsmoment der Verstellantriebe kann grundsätzlich sogar auf die das Resthaltemoment üblicherweise bereitstellende Bremseinrichtung (im Falle einer Azimutverstelleinrichtung die Bremsscheibe und Bremszangen) verzichtet werden. Für Inbetriebnahme- und Wartungszwecke sowie für den Fall einer Netzstörung muss allerdings eine Arretier- bzw. Halteeinrichtung für die Verstelleinrichtung vorgesehen sein. Dabei sind die Lasten zugrunde zu legen, die auf eine Windenergieanlage wirken, die sich im Trudelbetrieb befindet. Eine solche Halteeinrichtung muss nicht starr arretieren, wenn dies aus Sicherheitsgründen nicht gefordert ist, sondern sie darf bei Überschreiten einer Grenzlast durchrutschen. Sofern die Verstelleinrichtung also dennoch eine konventionelle Bremseinrichtung aufweist, kann diese dann durch die Steuereinrichtung während des Verfahrens der Verstelleinrichtung unbetätigt gehalten werden, also z.B. die Bremszangen geöffnet gehalten werden.

Um den Verschleiß der Verstellantriebe über ihre Lebensdauer zu vergleichmäßigen, können in alternierender Weise Elektromotoren unterschiedlicher Verstellantriebe mit der anderen, insbesondere geringeren, Drehzahl betrieben werden. Ein Wechsel von einem Verstellantrieb auf einen anderen Verstellantrieb kann insbesondere nach Ablauf einer parametrierbaren Zeit oder nach Erreichen einer parametrierbaren Anzahl von Verfahrvorgängen der Verstelleinrichtung vorgenommen werden. Es ist also ein zyklischer Wechsel zwischen den Antrieben bezüglich ihrer bremsenden Funktionen möglich. Als Übergabezeitpunkt zwischen unterschiedlichen Verstellantrieben bietet sich dabei ein Zeitpunkt zwischen zwei Yawvorgängen an, zu dem die Summe aller Antriebsmomente gleich Null ist. Die Verstellantriebe können bei der Nenndrehzahl der Elektromotoren insbesondere das gleiche Antriebsmoment besitzen. Es ist alternativ jedoch auch möglich, ausschließlich denselben Antrieb bzw. Elektromotor mit der geringeren Drehzahl zu betreiben. Dieser kann dann beispielsweise ein geringeres Antriebsmoment besitzen, als die übrigen (Haupt-) Antriebe.

Der beim Verfahren der Verstelleinrichtung mit einer geringeren Drehzahl betriebene Elektromotor wirkt aufgrund seines Rückstands gegenüber den übrigen Motoren als Generator, während die übrigen Elektromotoren motorisch wirken. Gemäß einer besonders praxisgemäßen Ausgestaltung kann daher die von dem als Generator wirkenden, mit einer geringeren Drehzahl betriebenen Elektromotor gewonnene Energie in ein elektrisches Netz der Windenergieanlage eingespeist werden. Dazu kann eine entsprechende Einspeiseeinrichtung vorgesehen sein. Bei dieser Ausgestaltung erfolgt also eine Rückgewinnung der durch das Verspannen der Verstellantriebe aufgebrachten Energie in das Anlagensystem.

Die erfindungsgemäße Vorrichtung kann zur Durchführung des erfindungsgemäßen Verfahrens geeignet sein.

Ein Ausführungsbeispiel der Erfindung wird nachfolgend anhand von Zeichnungen näher erläutert. Es zeigen schematisch:
- Fig. 1: ein Azimutverstellsystem mit einer erfindungsgemäßen Verstelleinrichtung gemäß einer ersten Ausgestaltung in einem Querschnitt,
- Fig. 2: eine Darstellung der erfindungsgemäßen Verstelleinrichtung, und
- Fig. 3: ein Diagramm zur Veranschaulichung der Funktion der erfindungsgemäßen Verstelleinrichtung.

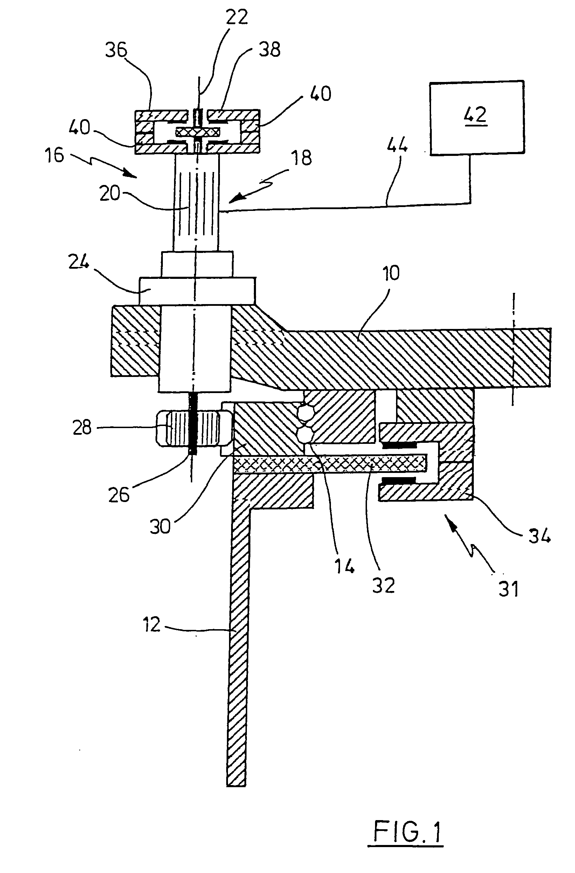

Soweit nichts anderes bestimmt, bezeichnen in den Figuren gleiche Bezugszeichen gleiche Gegenstände. In Fig. 1 ist schematisch ein Azimutsystem einer Windenergieanlage mit einer erfindungsgemäßen Verstelleinrichtung 16, in dem dargestellten Beispiel eine Azimutverstelleinrichtung 16, gezeigt. Natürlich könnte ebenso ein anderes Verstellsystem mit einer anderen Verstelleinrichtung, beispielsweise einer Blatteinstellwinkel-Verstelleinrichtung, vorgesehen sein. Die Verstelleinrichtung 16 besitzt in dem dargestellten Beispiel drei Verstellantriebe 18, vorliegend Azimutverstellantriebe 18, von denen einer in Fig. 1 zu erkennen ist. Die Verstelleinrichtung 16 dient zum Drehen eines Maschinenhauses einer Windenergieanlage. Insbesondere ist dabei ein Maschinenträger 10 des im Detail nicht dargestellten Maschinenhauses der Anlage gezeigt. Der Maschinenträger 10 trägt gondelseitig in an sich bekannter Weise einen nicht dargestellten Generator und einen ebenfalls nicht dargestellten Antriebsstrang mit dem Rotor der Windenergieanlage. In dem Beispiel weist der Rotor drei Rotorblätter auf. Der Maschinenträger 10 und mit ihm das Maschinenhaus sind drehbar auf dem ausschnittsweise dargestellten Turm 12 gelagert. Die Drehung des Maschinenhauses um die Längsachse des Turms 12 erfolgt dabei in an sich bekannter Weise über eine Azimutdrehverbindung 14.

Die Azimutantriebe 18 weisen jeweils einen mittels eines nicht dargestellten Frequenzumrichters in an sich bekannter Weise angesteuerten Elektromotor 20, vorliegend Drehstromasynchronmotor 20, auf. Der Elektromotor 20 wirkt auf eine Welle, deren Drehachse mit 22 bezeichnet ist. Die Verstelleinrichtung 16 weist weiterhin ein mehrstufiges Planetengetriebe 24 auf. Der Elektromotor 20 ist mit der schnellen Welle des als Drehmomentwandler fungierenden Getriebes 24 formschlüssig verbunden. Die langsame Abtriebswelle 26 des Getriebes 24 weist ein Ritzel 28 auf, das von außen mit einem außenverzahnten Azimutdrehlager 30 kämmt. An dem Azimutlager 30 ist außenseitig in dem dargestellten Beispiel eine Bremsscheibe 32 angeordnet, die von Bremszangen 34 teilweise umgriffen ist. Die Bremszangen werden in dem dargestellten Beispiel hydraulisch über eine zentrale Hydraulikeinheit betätigt, die gondelseitig auf dem Maschinenträger 10 angeordnet ist. Die Bremsscheibe 32 mit den Bremszangen 34 ist Teil einer Bremseinrichtung 31. Die Azimutverstelleinrichtung 16 weist weiterhin eine jedem der Verstellantriebe 18 jeweils zugeordnete elektrische Haltebremse 36 zum Halten des Asychronmotors 20 auf. Die Haltebremse 36 besitzt eine mit der schnellen Welle des Getriebes 24 verbundene Bremsscheibe 38, sowie auf die Bremsscheibe 38 wirkende Bremszangen 40.

Zum Drehen des Maschinenhauses der Windenergieanlage wird die Azimutverstelleinrichtung 16 verfahren, indem die Azimutverstellantriebe 18, und insbesondere die Elektromotoren 20 der Azimutantriebe 18, mit einer bestimmten Drehzahl betätigt werden. Über das Planetengetriebe 24 wird diese Drehbewegung der Elektromotoren 20 in eine langsamere Drehbewegung der langsamen Welle 26 umgewandelt. Durch die Bewegung der Welle 26 wird auch das Ritzel 28 entsprechend bewegt. Dieses überträgt seine Drehbewegung auf die mit ihm kämmende Verzahnung des Azimutlagers 30. Über die Azimutdrehverbindung 14 kommt es somit zu einer Drehung des Maschinenhauses um die Längsachse des Anlagenturms 12.

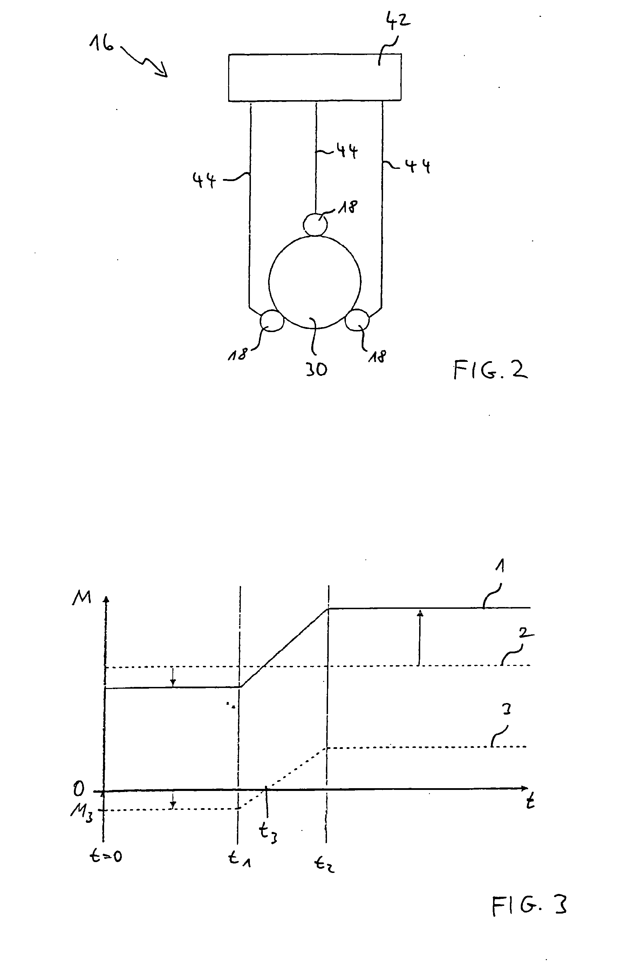

Die Azimutverstelleinrichtung 16 besitzt weiterhin eine Steuereinrichtung 42, die über eine Leitung 44 die Elektromotoren 20 der Verstellantriebe 18 der Verstelleinrichtung 16 ansteuern kann. Dies ist schematisch auch in Fig. 2 dargestellt. Insbesondere können durch die Steuereinrichtung 42 den Elektromotoren 20 der Verstellantriebe 18 Solldrehzahlen und/oder Solldrehmomente vorgegeben werden. Dabei können von der Steuereinrichtung 42 die von den Verstellantrieben 18 jeweils aufgebrachten Antriebsmomente ermittelt werden. Bei einem Verfahrwunsch für das Azimutsystem kann die Steuereinrichtung 42 das insgesamt von den Azimutantrieben 18 aufzubringende Antriebsmoment auf die Antriebe 18 durch eine individuelle Ansteuerung der Elektromotoren 20 verteilen. Insbesondere werden in dem dargestellten Beispiel zum Verfahren der Azimutverstelleinrichtung die Elektromotoren 20 von zwei der drei Verstellantriebe 18 in gleicher Drehrichtung und mit gleicher Drehzahl von der Steuereinrichtung 42 angesteuert. Gleichzeitig wird der Elektromotor 20 des dritten Verstellantriebs 18 ebenfalls in derselben Drehrichtung, wie die Elektromotoren 20 der übrigen Antriebe 18 betrieben, jedoch mit einer geringeren Drehzahl. Dies hat zur Folge, dass der langsamer betriebene Elektromotor 20, und mit ihm der entsprechende Verstellantrieb 18, den beiden anderen Elektromotoren 20 bzw. Verstellantrieben 18 hinterherläuft. Auf diese Weise kommt es zu einer Verspannung der Antriebe 18 und einer Vermeidung von unerwünschten Elastizitäten. Aufgrund der Verspannung ist ein beim Stand der Technik üblicherweise von der Bremseinrichtung 31 beim Verfahren der Azimutverstelleinrichtung 16 durch die Bremszangen 34 aufgebrachtes Resthaltemoment nicht mehr erforderlich.

Ebenso können beispielsweise bei einem Stillstand der Verstelleinrichtung 16 die Elektromotoren 20 zweier Verstellantriebe 18 in entgegengesetzter Drehrichtung und mit gleicher Drehzahl betrieben werden, wobei der Elektromotor 20 des dritten Verstellantriebs 18 nicht betätigt wird. Die Verstellantriebe 18 üben in dem dargestellten Beispiel bei gleicher Drehzahl ihrer Elektromotoren 20 dasselbe Antriebsmoment aus. Insofern wird mit dieser Ausgestaltung auch bei einem Stillstand der Verstelleinrichtung 16 ein Halten des Azimutsystems erreicht. Die Bremseinrichtung 31 ist auch vor diesem Hintergrund nicht zwingend erforderlich. Sie kann jedoch zu Wartungs- und Inbetriebnahmezwecken vorgesehen sein.

Das Ergebnis der erfindungsgemäßen Ansteuerung der Verstellantriebe 18 soll anhand des in Fig. 3 dargestellten Diagramms erläutert werden. In dem Diagramm ist das Drehmoment M über der Zeit t aufgetragen. Die Kurve 1 beschreibt dabei das von den drei Verstellantrieben 18 gemeinsam auf die Azimutdrehverbindung aufgebrachte Antriebsmoment. Die Kurve 2 beschreibt das in Summe von den beiden mit Nenndrehzahl und in gleicher Drehrichtung betriebenen Verstellantrieben 18 aufgebrachte konstante Antriebsmoment. Die Kurve 3 beschreibt das von dem Elektromotor 20 der dritten Verstelleinrichtung 18 aufgebrachte Antriebsmoment.

In Fig. 3 ist zu erkennen, dass das von den mit Nenndrehzahl betriebenen Antrieben 18 aufgebrachte gemeinsame Drehmoment konstant ist (Kurve 2). Vom Zeitpunkt t=0 bis t₁ wird der Elektromotor 20 des dritten Verstellantriebs 18 mit einer geringeren Drehzahl betrieben, als die Elektromotoren 20 der beiden anderen Verstellantriebe 18. Entsprechend wird durch den langsamer betriebenen Elektromotor 20 bzw. den entsprechenden Verstellantrieb 18 eine Bremswirkung und somit ein negatives Antriebsmoment M₃ ausgeübt. Das von den drei Verstellantrieben 18 gemeinsam aufgebrachte Antriebsmoment (Kurve 1) verringert sich zwischen dem Zeitpunkt t=0 und t₁ entsprechend ebenfalls um M₃. Zum Zeitpunkt t₁ werden von der Steuereinrichtung 42, und insbesondere einer dieser zugeordneten Windmesseinrichtung, starke gegen die Verfahrrichtung des Azimutsystems wirkende Windlasten festgestellt. Um die beiden mit Nenndrehzahl verfahrenden Verstellantriebe 18 zu unterstützen, wird daher durch die Steuereinrichtung 42 die Drehzahl des mit der geringeren Drehzahl betriebenen Elektromotors 20 erhöht. Insbesondere findet vom Zeitpunkt t₁ bis zum Zeitpunkt t₂ eine lineare Erhöhung der Drehzahl und damit des von diesem Verstellantrieb 18 ausgeübten Antriebsmoments statt. Zum Zeitpunkt t₃ erfolgt der Übergang des entsprechenden Elektromotors 20 vom generatorischen zum motorischen Betrieb. Das von allen Antrieben gemeinsam aufgebrachte Antriebsmoment (Kurve 1) erhöht sich entsprechend. Zum Zeitpunkt t₂ wird die Drehzahl des Elektromotors 20 des ursprünglich langsamer betriebenen Verstellantriebs 18 nicht weiter erhöht, sondern auf einem konstant erhöhten Niveau gehalten. Entsprechend verharrt auch das von den Verstellantrieben 18 gemeinsam aufgebrachte Antriebsmoment (Kurve 1) auf diesem erhöhten Momentenniveau. Auf diese Weise kann auch gegen starke Windlasten sicher verfahren werden.

Die folgende Tabelle zeigt beispielhaft die Funktionsweisen der drei Verstellantriebe 18 bei unterschiedlichen Lastsituationen:

| **"Lastfall" des Azimutsystems** | **Azimutantrieb 1** | **Azimutantrieb 2** | **Azimutantrieb 3** |
|---|---|---|---|
| Anfahren mit Gegenmoment aus dem Wind | treibend | treibend | treibend |
| Fahren mit Gegenmoment aus dem Wind | treibend | treibend | treibend oder bremsend |
| Anhalten mit Gegenmoment aus dem Wind | bremsend | bremsend | treibend oder bremsend |
| Anfahren mit treibendem Moment aus dem Wind | treibend | treibend | bremsend |
| Fahren mit treibendem Moment aus dem Wind | treibend oder bremsend | treibend oder bremsend | bremsend |
| Anhalten mit treibendem Moment aus dem Wind | bremsend | bremsend | bremsend |

Nach Ablauf einer parametrierbaren Zeit kann von der Steuereinrichtung 42 ein anderer der drei Elektromotoren 20 der Verstellantriebe 18 für die Verspannung eingesetzt werden, also beispielsweise mit einer geringeren Drehzahl betrieben werden. Durch einen solchen zyklischen Wechsel zwischen den Verstellantrieben 18 wird der Verschleiß über ihre Lebensdauer vergleichmäßigt. Es kann weiterhin eine nicht näher dargestellte Einspeiseeinrichtung vorgesehen sein, mit der die von dem beim Verfahren der Verstelleinrichtung 16 mit der geringeren Drehzahl betriebenen, als Generator wirkenden Elektromotor 20, gewonnene Energie in das elektrische Netz der Windenergieanlage rückgespeist wird.

Aufgrund der erfindungsgemäß erreichten Verspannung bietet sich die Erfindung insbesondere bei Anlagenstandorten an, die einem starken und wechselnden Wind ausgesetzt sind.

## Patentansprüche

1. Verfahren zum Drehen einer Komponente einer Windenergieanlage durch Verfahren einer Verstelleinrichtung (16), wobei die Verstelleinrichtung (16) mindestens zwei jeweils mindestens einen Elektromotor (20) aufweisende Verstellantriebe (18) zum Verfahren der Verstelleinrichtung (16) umfasst,
**dadurch gekennzeichnet, dass** während des Verfahrens der Verstelleinrichtung (16) die Antriebsmomente derart unterschiedlich auf die Verstellantriebe verteilt werden, dass der Elektromotor (20) mindestens eines der mindestens zwei Verstellantriebe (18) mit einer anderen Drehzahl, als der Elektromotor (20) mindestens eines anderen der mindestens zwei Verstellantriebe (18) betrieben wird, um die Verstellantriebe gegeneinander zu verspannen.

2. Verfahren nach Anspruch 1, **dadurch gekennzeichnet, dass** die mit unterschiedlicher Drehzahl betriebenen Elektromotoren (20) in gleicher Drehrichtung betrieben werden.

3. Verfahren nach einem der vorhergehenden Ansprüche, **dadurch gekennzeichnet, dass** zwischen dem mit einer anderen Drehzahl betriebenen Elektromotor (20) und dem Elektromotor (20) des mindestens einen anderen Verstellantriebs (18) eine Drehzahldifferenz von 20 bis 100 Umdrehungen pro Minute besteht.

4. Verfahren nach einem der Ansprüche 1 bis 3, **dadurch gekennzeichnet, dass** die Komponente ein Maschinenhaus der Windenergieanlage ist und, dass die Verstelleinrichtung (16) eine Azimutverstelleinrichtung (16) ist.

5. Verfahren nach einem der Ansprüche 1 bis 3, **dadurch gekennzeichnet, dass** die Komponente ein Rotorblatt der Windenergieanlage ist und, dass die Verstelleinrichtung (16) eine Blatteinstellwinkelverstelleinrichtung ist.

6. Verfahren nach Anspruch 2 oder nach Anspruch 2 und einem der Ansprüche 3 bis 5, **dadurch gekennzeichnet, dass** die Verstelleinrichtung (16) mehr als zwei Verstellantriebe (18) mit jeweils mindestens einem Elektromotor (20) aufweist, wobei die Elektromotoren (20) von mehr als zwei Verstellantrieben (18) während des Verfahrens der Verstelleinrichtung (16) in gleicher Drehrichtung betrieben werden, wobei der Elektromotor (20) mindestens eines der mehr als zwei Verstellantriebe (18) mit einer geringeren Drehzahl betrieben wird, als die Elektromotoren (20) der anderen der mehr als zwei Verstellantriebe, und wobei die Elektromotoren (20) der anderen Verstellantriebe (18) mit der gleichen Drehzahl betrieben werden.

7. Verfahren nach Anspruch 2 oder nach Anspruch 2 und einem der vorhergehenden Ansprüche, **dadurch gekennzeichnet, dass** bei hohen gegen die Verfahrbewegung der Verstelleinrichtung (16) wirkenden Lasten die Drehzahl des mindestens einen mit einer geringeren Drehzahl betriebenen Elektromotors (20) erhöht wird.

8. Verfahren nach einem der vorhergehenden Ansprüche, **dadurch gekennzeichnet, dass** bei Stillstand der Verstelleinrichtung (16) die Elektromotoren (20) zumindest zweier Verstellantriebe (18) in entgegen gesetzter Drehrichtung, aber mit einer Drehzahl ungleich Null so angesteuert werden, dass die Verstellantriebe (18) in Summe kein Drehmoment auf die Verstelleinrichtung (16) ausüben.

9. Verfahren nach einem der vorhergehenden Ansprüche, **dadurch gekennzeichnet, dass** in alternierender Weise Elektromotoren (20) unterschiedlicher Verstellantriebe (18) mit der anderen Drehzahl betrieben werden.

10. Verstelleinrichtung zum Drehen einer Komponente einer Windenergieanlage durch Verfahren der Verstelleinrichtung (16), mit mindestens zwei jeweils mindestens einen Elektromotor (20) aufweisenden Verstellantrieben (18) zum Verfahren der Verstelleinrichtung (16),
**dadurch gekennzeichnet, dass** die Verstelleinrichtung (16) eine Steuereinrichtung (42) aufweist, die dazu ausgebildet ist, die Antriebsmomente derart unterschiedlich auf die Verstellantriebe zu verteilen, um während des Verfahrens der Verstelleinrichtung (16) den Elektromotor (20) mindestens eines der mindestens zwei Verstellantriebe (18) mit einer anderen Drehzahl, als den Elektromotor (20) mindestens eines anderen der mindestens zwei Verstellantriebe (18) zu betreiben, um die Verstellantriebe gegeneinander zu verspannen.

11. Verstelleinrichtung nach Anspruch 10, **dadurch gekennzeichnet, dass** die Steuereinrichtung (42) dazu ausgebildet ist, die mit unterschiedlicher Drehzahl betriebenen Elektromotoren (20) in gleicher Drehrichtung zu betreiben.

12. Verstelleinrichtung nach einem der Ansprüche 10 oder 11, **dadurch gekennzeichnet, dass** die Steuereinrichtung (42) dazu ausgebildet ist, die Verstellantriebe so anzusteuern, dass zwischen dem mit einer anderen Drehzahl betriebenen Elektromotor (20) und dem Elektromotor (20) des mindestens einen anderen Verstellantriebs (18) eine Drehzahldifferenz von 20 bis 100 Umdrehungen pro Minute besteht.

13. Verstelleinrichtung nach einem der Ansprüche 10 bis 12, **dadurch gekennzeichnet, dass** die Komponente ein Maschinenhaus der Windenergieanlage ist und, dass die Verstelleinrichtung (16) eine Azimutverstelleinrichtung (16) ist.

14. Verstelleinrichtung nach einem der Ansprüche 10 bis 12, **dadurch gekennzeichnet, dass** die Komponente ein Rotorblatt der Windenergieanlage ist und, dass die Verstelleinrichtung (16) eine Blatteinstellwinkelverstelleinrichtung ist.

15. Verstelleinrichtung nach Anspruch 11 oder nach Anspruch 11 und einem der Ansprüche 12 bis 14, **dadurch gekennzeichnet, dass** die Verstelleinrichtung (16) mehr als zwei Verstellantriebe (18) mit jeweils mindestens einem Elektromotor (20) aufweist, wobei die Steuereinrichtung (42) dazu ausgebildet ist, Elektromotoren (20) von mehr als zwei Verstellantrieben (18) während des Verfahrens der Verstelleinrichtung (16) in gleicher Drehrichtung zu betreiben und, den Elektromotor (20) mindestens eines der mehr als zwei Verstellantriebe (18) mit einer geringeren Drehzahl zu betreiben, als die Elektromotoren (20) der anderen der mehr als zwei Verstellantriebe (18), und wobei die Steuereinrichtung (42) dazu ausgebildet ist, die Elektromotoren (20) der anderen Verstellantriebe (18) mit der gleichen Drehzahl zu betreiben.

16. Verstelleinrichtung nach Anspruch 11 oder nach Anspruch 11 und einem der Ansprüche 12 bis 15, **dadurch gekennzeichnet, dass** mit der Steuereinrichtung (42) bei hohen gegen die Verfahrbewegung der Verstelleinrichtung (16) wirkenden Lasten die Drehzahl des mindestens einen mit einer geringeren Drehzahl betriebenen Elektromotors (20) erhöhbar ist.

17. Verstelleinrichtung nach einem der Ansprüche 10 bis 16, **dadurch gekennzeichnet, dass** die Steuereinrichtung (42) dazu ausgebildet ist, bei Stillstand der Verstelleinrichtung (16) die Elektromotoren (20) zumindest zweier Verstellantriebe (18) in entgegen gesetzter Drehrichtung, aber mit einer Drehzahl ungleich Null so anzusteuern, dass die Verstellantriebe (18) in Summe kein Drehmoment auf die Verstelleinrichtung (16) ausüben.

18. Verstelleinrichtung nach einem der Ansprüche 10 bis 17, **dadurch gekennzeichnet, dass** mit der Steuereinrichtung (42) in alternierender Weise Elektromotoren (20) unterschiedlicher Verstellantriebe (18) mit der anderen Drehzahl betreibbar sind.

## Claims

1. Method for rotating a component of a wind turbine by traversing an adjustment device (16), wherein the adjustment device (16) comprises at least two adjustment drives (18), each one thereof having at least one electric motor (20), for traversing the adjustment device (16),
**characterised in that** during the traversing of the adjustment device (16), the drive torques are distributed unevenly over the adjustment drives (18) such that the electric motor (20) of at least one of the at least two adjustment drives (18) is operated at a different rotational speed than the electric motor (20) of at least one other of the at least two adjustment drives (18) in order to brace the adjustment drives (18) against each other.

2. Method according to claim 1, **characterised in that** the electric motors (20) operated at different rotational speeds are operated in the same sense of rotation.

3. Method according to one of the preceding claims, **characterised in that** there is a difference in rotational speed of 20 to 100 rotations per minute between the electric motor (20) operated at the different rotational speed and the electric motor (20) of the at least one other adjustment drive (18).

4. Method according to one of claims 1 to 3, **characterised in that** the component is a nacelle of the wind turbine and the adjustment device (16) is a yaw adjustment device (16).

5. Method according to one of claims 1 to 3, **characterised in that** the component is a rotor blade of the wind turbine, and the adjustment device (16) is an adjustment device for the blade pitch angle.

6. Method according to claim 2 or according to claim 2 and one of claims 3 to 5, **characterised in that** the adjustment device (16) features more than two adjustment drives (18), each one of them having at least one electric motor (20), wherein the electric motors (20) of more than two adjustment drives (18) are operated in the same sense of rotation during the traversing of the adjustment device (16), wherein the electric motor (20) of at least one of the more than two adjustment drives (18) is operated at a lower rotational speed than the electric motors (20) of the other ones of the more than two adjustment drives (18) and wherein the electric motors (20) of the other adjustment drives (18) are operated at the same rotational speed.

7. Method according to claim 2 or according to claim 2 and one of the preceding claims, **characterised in that** at high loads acting against the traversing movement of the adjustment device (16), the rotational speed of the at least one electric motor (20) operated at a lower rotational speed is increased.

8. Method according to one of the preceding claims, **characterised in that** at standstill of the adjustment device (16), the electric motors (20) of at least two adjustment drives (18) are operated in opposite senses of rotation, but with a rotational speed not equal to zero, such that the adjustment drives (18) do not exert any torque on the adjustment device (16) altogether.

9. Method according to one of the preceding claims, **characterised in that** electric motors (20) of different adjustment drives (18) are operated at the different rotational speed in an alternating manner.

10. Adjustment device for rotating a component of a wind turbine by traversing the adjustment device (16), with at least two adjustment drives (18), each one thereof having at least one electric motor (20), for traversing the adjustment device (16),
**characterised in that** the adjustment device (16) has a control device (42), which is realised to distribute the drive torques unevenly over the adjustment drives (18) such that the electric motor (20) of at least one of the at least two adjustment drives (18) is operated at a different rotational speed than the electric motor (20) of at least one other of the at least two adjustment drives (18) during the traversing of the adjustment device (16) in order to brace the adjustment drives (18) against each other.

11. Adjustment device according to claim 10, **characterised in that** the control device (42) is realised to operate the electric motors (20) operated at different rotational speeds in the same sense of rotation.

12. Adjustment device according to one of claims 10 or 11, **characterised in that** the control device (42) is realised to operate the adjustment drives (18) such that there is a difference in rotational speed of 20 to 100 rotations per minute between the electric motor (20) operated at the different rotational speed and the electric motor (20) of the at least one other adjustment drive (18).

13. Adjustment device according to one of claims 10 to 12, **characterised in that** the component is a nacelle of the wind turbine and the adjustment device (16) is a yaw adjustment device (16).

14. Adjustment device according to one of claims 10 to 12, **characterised in that** the component is a rotor blade of the wind turbine, and the adjustment device (16) is an adjustment device for the blade pitch angle.

15. Adjustment device according to claim 11 or according to claim 11 and one of claims 12 to 14, **characterised in that** the adjustment device (16) features more than two adjustment drives (18), each one of them having at least one electric motor (20), wherein the control device (42) is realised to operate electric motors (20) of more than two adjustment drives (18) in the same sense of rotation during the traversing of the adjustment device (16), and to operate the electric motor (20) of at least one of the more than two adjustment drives (18) at a lower rotational speed than the electric motors (20) of the other ones of the more than two adjustment drives (18), and wherein the control device (42) is realised to operate the electric motors (20) of the other adjustment drives (18) at the same rotational speed.

16. Adjustment device according to claim 11 or according to claim 11 and one of claims 12 to 15, **characterised in that** at high loads acting against the traversing movement of the adjustment device (16), the rotational speed of the at least one electric motor (20) operated at a lower rotational speed can be increased by the control device (42).

17. Adjustment device according to one of claims 10 to 16, **characterised in that** the control device (42) is realised to operate the electric motors (20) of at least two adjustment drives (18) in opposite senses of rotation, but with a rotational speed not equal to zero at standstill of the adjustment device (16), such that the adjustment drives (18) do not exert any torque on the adjustment device (16) altogether.

18. Adjustment device according to one of claims 10 to 17, **characterised in that** electric motors (20) of different adjustment drives (18) can be operated at the different rotational speed by the control device (42) in an alternating manner.

## Revendications

1. Procédé pour tourner un composant d'une éolienne en déplaçant un dispositif de réglage (16), le dispositif de réglage (16) comportant au moins deux entraînements de réglage (18), dont chacun comporte au moins un moteur électrique (20) pour déplacer le dispositif de réglage (16),
**caractérisé en ce que** pendant le déplacement du dispositif de réglage (16), les couples d'entraînement sont distribués aux entraînements de réglage (18) de manière différente, tellement que le moteur électrique (20) d'au moins un des au moins deux entraînements de réglage (18) est opéré avec une différente vitesse que le moteur électrique (20) d'au moins un autre des au moins deux entraînements de réglage (18), afin de serrer les entraînements de réglage (18) l'un contre l'autre.

2. Procédé selon la revendication 1, **caractérisé en ce que** les moteurs électriques (20) opérés avec vitesses différentes sont opérés en même sens de rotation.

3. Procédé selon l'une quelconque des revendications précédentes, **caractérisé en ce que** entre le moteur électrique (20) opéré avec une différente vitesse et le moteur électrique (20) de l'au moins un autre entraînement de réglage (18) il y a une différence des vitesses de 20 à 100 tours par minute.

4. Procédé selon l'une quelconque des revendications 1 à 3, **caractérisé en ce que** le composant est une nacelle de l'éolienne, et que le dispositif de réglage (16) est un dispositif de réglage d'azimut (16).

5. Procédé selon l'une quelconque des revendications 1 à 3, **caractérisé en ce que** le composant est une pale de rotor de l'éolienne, et que le dispositif de réglage (16) est un dispositif de réglage du pas des pales.

6. Procédé selon la revendication 2 ou selon la revendication 2 et l'une quelconque des revendications 3 à 5, **caractérisé en ce que** le dispositif de réglage (16) comporte plus que deux entraînements de réglage (18) dont chacun a au moins un moteur électrique (20), les moteurs électriques (20) de plus que deux entraînements de réglage (18) étant opérés en même sens de rotation pendant le déplacement du dispositif de réglage (16), le moteur électrique (20) d'au moins un des plus que deux entraînements de réglage (18) étant opéré avec une vitesse plus petite que les moteurs électriques (20) des autres des plus que deux entraînements de réglage (18), et les moteurs électriques (20) des autres entraînements de réglage (18) étant opérés avec la même vitesse.

7. Procédé selon la revendication 2 ou selon la revendication 2 et l'une quelconque des revendications précédentes, **caractérisé en ce que** chez des charges hautes agissantes contre le mouvement de déplacement du dispositif de réglage (16), la vitesse de l'au moins un moteur électrique (20) qui est opéré avec une vitesse plus petite est augmentée.

8. Procédé selon l'une quelconque des revendications précédentes, **caractérisé en ce que** dans l'état arrêté du dispositif de réglage (16), les moteurs électriques (20) d'au moins deux entraînements de réglage (18) sont commandés en sens de rotation opposé, mais avec une vitesse différente de zéro, de sorte que les entraînements de réglage (18) en somme non exercent aucun couple de rotation au dispositif de réglage (16).

9. Procédé selon l'une quelconque des revendications précédentes, **caractérisé en ce que** des moteurs électriques (20) de différents entraînements de réglage (18) sont opérés avec la différente vitesse de manière alternante.

10. Dispositif de réglage pour tourner un composant d'une éolienne en déplaçant le dispositif de réglage (16), avec au moins deux entraînements de réglage (18), dont chacun comporte au moins un moteur électrique (20) pour déplacer le dispositif de réglage (16),
**caractérisé en ce que** le dispositif de réglage (16) comporte un système de commande (42), qui est configuré à distribuer les couples d'entraînement d'une façon tellement différente aux entraînements de réglage (18) que pendant le déplacement du dispositif de réglage (16), le moteur électrique (20) d'au moins un des au moins deux entraînements de réglage (18) est opéré avec une différente vitesse que le moteur électrique (20) d'au moins un autre des au moins deux entraînements de réglage (18), afin de serrer les entraînements de réglage (18) l'un contre l'autre.

11. Dispositif de réglage selon la revendication 10, **caractérisé en ce que** le système de commande (42) est configuré pour opérer les moteurs électriques (20) opérés avec vitesse différente en même sens de rotation.

12. Dispositif de réglage selon l'une quelconque des revendications 10 ou 11, **caractérisé en ce que** le système de commande (42) est configuré pour commander les entraînements de réglage (18) tellement qu'entre le moteur électrique (20) opéré avec une différente vitesse et le moteur électrique (20) de l'au moins un autre entraînement de réglage (18) il y a une différence des vitesses de 20 à 100 tours par minute.

13. Dispositif de réglage selon l'une quelconque des revendications 10 à 12, **caractérisé en ce que** le composant est une nacelle de l'éolienne, et que le dispositif de réglage (16) est un dispositif de réglage d'azimut (16).

14. Dispositif de réglage selon l'une quelconque des revendications 10 à 12, **caractérisé en ce que** le composant est une pale de rotor de l'éolienne, et que le dispositif de réglage (16) est un dispositif de réglage du pas des pales.

15. Dispositif de réglage selon la revendication 11 ou la revendication 11 et l'une quelconque des revendications 12 à 14, **caractérisé en ce que** le dispositif de réglage (16) comporte plus que deux entraînements de réglage (18) dont chacun a au moins un moteur électrique (20), le système de commande (42) étant configuré pour opérer des moteurs électriques (20) de plus que deux entraînements de réglage (18) en même sens de rotation pendant le déplacement du dispositif de réglage (16), et pour opérer le moteur électrique (20) d'au moins un des plus que deux entraînements de réglage (18) avec une vitesse plus petite que les moteurs électriques (20) des autres des plus que deux entraînements de réglage (18), et le système de commande (42) étant configuré pour opérer les moteurs électriques (20) des autres entraînements de réglage (18) avec la même vitesse.

16. Dispositif de réglage selon la revendication 11 ou selon la revendication 11 et l'une quelconque des revendications 12 à 15, **caractérisé en ce que** chez des charges hautes agissantes contre le mouvement de déplacement du dispositif de réglage (16), la vitesse de l'au moins un moteur électrique (20) qui est opéré avec une vitesse plus petite peut être augmentée par le système de commande (42).

17. Dispositif de réglage selon l'une quelconque des revendications 10 à 16, **caractérisé en ce que** le système de commande (42) est configuré pour commander les moteurs électriques (20) d'au moins deux entraînements de réglage (18) en sens de rotation opposé dans l'état arrêté du dispositif de réglage (16), mais avec une vitesse différente de zéro, de sorte que les entraînements de réglage (18) en somme non exercent pas aucun couple de rotation au dispositif de réglage (16).

18. Dispositif de réglage selon l'une quelconque des revendications 10 à 17, **caractérisé en ce que** par le système de commande (42), des moteurs électriques (20) de différents entraînements de réglage (18) peuvent être opérés avec la différente vitesse de manière alternante.
